# FASCICULE DE BREVET EUROPEEN

(11) **EP 1 224 719 B1**
(45) Date de publication et mention de la délivrance du brevet: **29.10.2003**
(21) Numéro de dépôt: 00956641.5
(22) Date de dépôt: 08.08.2000
(51) Int. Cl.: H02G 1/08, H02G 1/06, B65H 57/14

(54) **DISPOSITIF DE GUIDAGE D'AU MOINS UN ELEMENT LONGILIGNE SOUPLE, TEL QUE CABLE OU AUTRE, A CONTOUR SUBSTANTIELLEMENT FERME**
FÜHRUNGSVORRICHTUNG WENIGSTENS EINES LANGGESTRECKTEN BIEGSAMEN ELEMENTS, WIE KABEL ODER ÄHNLICHES, MIT VORWIEGEND GESCHLOSSENER KONTUR
DEVICE FOR GUIDING AT LEAST A FLEXIBLE ELONGATED ELEMENT SUCH AS A CABLE OR THE LIKE, WITH SUBSTANTIALLY CLOSED CONTOUR

(30) Priorité: 10.08.1999 FR 9910361
(43) Date de publication de la demande: 24.07.2002
(73) Titulaire: I.C.M. Group, 21500 Montbard (FR)
(72) Inventeur: DURIN, Michel, F-78330 Fontenay-le-Fleury (FR)
(74) Mandataire: Santarelli
(86) Numéro de dépôt international: FR0002275
(87) Numéro de publication internationale: WO01011742

(56) Documents cités:
- WO-A-99/06746
- DE-U- 9 312 272
- FR-A- 2 662 314
- FR-A- 2 664 441
- US-A- 2 483 760

## Description

La présente invention concerne un dispositif de guidage d'au moins un élément longiligne souple.

On entend ici par élément longiligne souple un élément de grande longueur souvent livré en bobines et mis en oeuvre par une opération de tirage au cours de laquelle les bobines sont déroulées.

Un tel élément longiligne souple est par exemple un câble, électrique ou similaire, un tube, par exemple d'instrumentation ou de transport de fluides ; un câble, lorsqu'il est électrique, englobe ici non seulement un câble propre au transport et à la distribution de l'énergie électrique, mais aussi un câble et une fibre propres à une transmission d'informations de manière électrique, optique ou autre.

Dans ce qui suit, il sera souvent question de câble(s), pour faciliter l'exposé, mais, bien entendu, tout ce qui est dit à propos de câble(s) est valable pour tout élément du type longiligne souple.

L'opération de tirage d'un câble est généralement mise à profit pour mettre en place le câble et l'implanter dans son lieu d'utilisation.

Il est bien rare qu'un câble soit mis en place de façon uniquement rectiligne ; il est amené en effet à devoir suivre un chemin d'implantation comportant souvent des coudes et/ou des changements de plan.

Dès lors, on a déjà prévu des dispositifs de guidage du câble pour le guider lors de l'opération de tirage ; de tels dispositifs de guidage comportent généralement un, voire plusieurs rouleaux montés pivotant autour d'un axe disposé transversalement par rapport à la direction de déplacement du câble tiré.

On a déjà proposé, notamment dans le document FR-A-2 664 441, qui représente l'état de la technique le plus proche, un dispositif de guidage d'au moins un élément longiligne souple tel que câble ou autre, destiné à guider ledit élément lors d'une opération de tirage effectuée par exemple pour sa mise en place, et comportant plusieurs rouleaux montés pivotant autour d'un axe prévu pour être disposé transversalement par rapport à la direction de déplacement de l'élément tiré et disposés en sorte qu'ils définissent un espace destiné à recevoir ledit élément et dont le contour, apprécié globalement transversalement par rapport à ladite direction de déplacement, est substantiellement fermé, les axes des rouleaux étant portés par un support fermé ouvrable en deux pièces dont l'une est montée articulée par rapport à l'autre.

Un tel dispositif de guidage permet de tirer le câble dans toutes les directions.

La présente invention a pour but de proposer un dispositif de guidage du type ci-dessus de réalisation simple et aisée.

Selon l'invention, un dispositif de guidage d'au moins un élément longiligne souple tel que câble ou autre, destiné à guider ledit élément lors d'une opération de tirage effectuée par exemple pour sa mise en place, et comportant quatre rouleaux montés pivotant autour d'un axe prévu pour être disposé transversalement par rapport à la direction de déplacement de l'élément tiré et disposés en sorte qu'ils définissent un espace destiné à recevoir ledit élément et dont le contour, apprécié globalement transversalement par rapport à ladite direction de déplacement, est substantiellement fermé, les axes des rouleaux étant portés par un support fermé ouvrable en deux pièces dont l'une est montée articulée par rapport à l'autre, est caractérisé par le fait qu'une première pièce est un fer-plat plié en sorte qu'elle est constituée de trois étriers en U aboutés, deux étriers étant disposés face à face et reliés chacun à l'extrémité d'une aile du troisième étrier dont l'âme s'étend perpendiculairement aux âmes, parallèles, desdits deux étriers et la seconde pièce est un fer-plat plié en sorte de constituer un quatrième étrier en U analogue aux étriers de la première pièce mais dont les extrémités des ailes, non liées à l'âme de l'étrier en U, présentent chacune un prolongement sous forme d'une patte s'étendant vers l'extérieur du U parallèlement à l'âme dudit U.

De préférence, chacun des étriers du support reçoit un rouleau monté libre en rotation autour d'un axe porté par les ailes de chaque étrier du support et s'étendant parallèlement à son âme.

Avantageusement, les axes sont maintenus axialement par, d'un côté, une tête qu'ils présentent à une extrémité et, de l'autre côté, par un matage de leur autre extrémité formant par exemple deux oreilles d'arrêt axial s'étendant radialement au delà du diamètre du trou, traversé par l'axe, ménagé dans l'aile correspondante du U.

De préférence, les axes associés aux étriers de la première pièce qui se font face sont mis à profit pour solidariser les deux pièces du support en sorte que les deux pattes de la seconde pièce sont maintenues appliquées contre la face externe des ailes libres desdits étriers de la première pièce.

Avantageusement, les axes des rouleaux sont quasiment dans un même plan.

De préférence, les rouleaux sont tous identiques et leurs axes sont disposés selon les côtés d'un carré.

Avantageusement, les deux pièces portent des moyens de verrouillage pour le maintien du support en position de fermeture.

De préférence, les moyens de verrouillage sont du type à crochet ; le crochet coopère très préférentiellement avec l'extrémité de l'axe d'un rouleau munie d'une tête.

Avantageusement, le support est maintenu élastiquement dans sa position de fermeture grâce à la partie, prévue élastique, du support qui porte le crochet.

De préférence, le contour de l'espace destiné à recevoir au moins un élément longiligne souple est circulaire.

Avantageusement, la surface périphérique externe des rouleaux comprend une partie torique.

De préférence, les extrémités des rouleaux sont agencées en sorte que l'interstice entre les rouleaux y est sensiblement nul.

Avantageusement, le support comporte au moins une boutonnière pour sa fixation à un élément porteur.

De préférence, la surface périphérique externe des rouleaux est en au moins deux couleurs tranchées.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue en perspective d'un dispositif de guidage selon l'invention fixé à un chemin de câbles en fils ;
- la figure 2 montre de face le dispositif de guidage de la figure 1 ;
- la figure 3 est une vue partielle en coupe de l'accessoire de fixation seul mis en oeuvre pour la fixation du dispositif de guidage sur le chemin de câbles en fils ;
- la figure 4 est une vue de dessus montrant l'utilisation de dispositifs de guidage selon l'invention pour la mise en place de câbles dans une portion de chemin de câbles non rectiligne ;
- la figure 5 est analogue à la figure 4 et montre l'utilisation de dispositifs de guidage selon l'invention pour la mise en place de câbles dans une portion de chemin de câbles comportant un changement de plan ;
- la figure 6 est analogue à la figure 1 et représente le dispositif de guidage selon l'invention "ouvert" pour l'insertion des câbles avant tirage ;
- la figure 7 est une vue partielle montrant une variante d'accessoire de fixation, ici en forme de moyen d'étau.

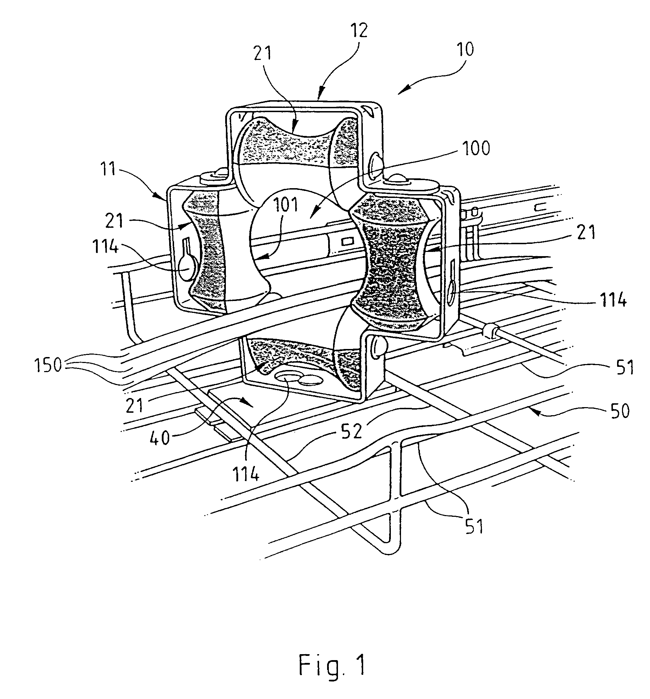

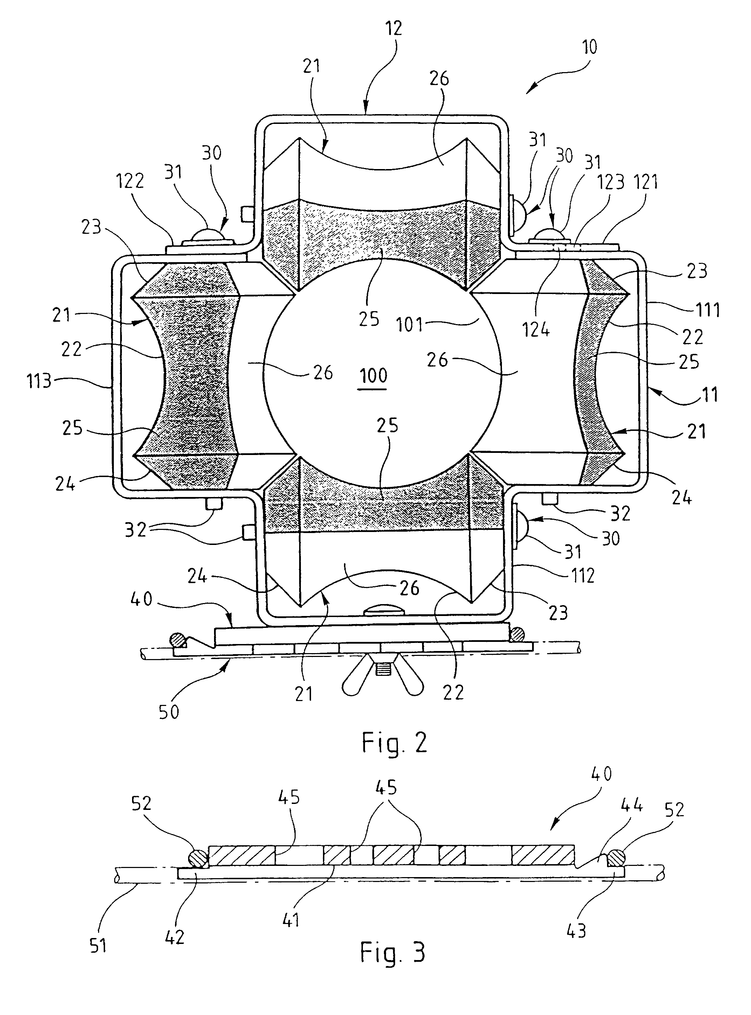

Sur les figures 1 et 2, un dispositif de guidage selon l'invention porte globalement la référence 10.

Ici, le dispositif de guidage 10 est mis en oeuvre pour l'installation de câbles 150 dans un chemin de câbles 50.

Dans la forme représentée, le chemin de câbles 50 est un chemin de câbles en fils comportant, sous forme maillée, des fils de deux types différents, à savoir, d'une part, des fils longitudinaux 51, communément appelés fils de chaîne, qui courent longitudinalement, de manière rectiligne ou quasi rectiligne, sur toute leur longueur, et, d'autre part, établis transversalement de place en place le long de ces fils longitudinaux 51, en étant dûment assujettis à ceux-ci, des fils transversaux 52 conformés en U, communément appelés fils de trame, l'ensemble formant globalement trois panneaux, en pratique plans ou sensiblement plans, à savoir un panneau de fond et deux panneaux latéraux.

Le dispositif de guidage 10 est également adapté à être mis en oeuvre pour l'installation de câbles dans un chemin de câbles en tôle, non représenté, de type connu en soi.

Ces chemins de câbles en fils ou en tôle sont couramment utilisés pour assurer, à la manière d'une goulotte, le soutien, le logement et la protection de câbles, tels que les câbles 150.

Le dispositif de guidage 10 est constitué d'un support 11-12 supportant des rouleaux 21, ici quatre rouleaux 21.

Le support 11-12 est en deux pièces, une première pièce 11 et une seconde pièce 12.

La première pièce 11 est un fer-plat globalement plié en U ; plus précisément, elle est constituée de trois étriers 111, 112, 113 en U aboutés, les deux étriers 111 et 113 étant disposés face à face et reliés chacun à l'extrémité d'une aile de l'étrier 112 dont l'âme s'étend perpendiculairement aux âmes, parallèles, des étriers 111 et 113.

La seconde pièce 12 est un fer-plat plié, analogue au fer-plat de la première pièce 11, en sorte de constituer un étrier analogue aux étriers 111, 112, 113 mais dont les extrémités des ailes, non liées à l'âme de l'étrier en U, sont prolongées selon deux pattes 121, 122 s'étendant vers l'extérieur du U parallèlement à l'âme dudit U.

Chacun des étriers du support 11-12 reçoit un rouleau 21 monté libre en rotation autour d'un axe 30 porté par les ailes de chaque étrier du support 11-12 et s'étendant parallèlement à son âme ; les axes 30 sont maintenus axialement par, d'un côté, une tête 31 qu'ils présentent à une extrémité et, de l'autre côté, par un matage de leur autre extrémité 32 formant par exemple deux oreilles d'arrêt axial s'étendant radialement au delà du diamètre du trou, traversé par l'axe 30, ménagé dans l'aile correspondante du U.

Ici, les axes 30 associés aux étriers 111 et 113 sont mis à profit pour solidariser les deux pièces 11 et 12 du support en sorte que les deux pattes 121, 122 de la seconde pièce 12 sont maintenues appliquées contre la face externe des ailes libres des étriers 111 et 112 de la première pièce 11.

Chaque rouleau 21, par exemple en matière plastique, est bien entendu de révolution et comprend une partie centrale 22 bordée par deux parties d'extrémité 23, 24 ; la partie centrale 22 est en forme de diabolo : plus précisément, sa génératrice est un arc de cercle s'étendant sur 90 degrés et la partie centrale 22 est donc de forme torique ; chaque partie d'extrémité 23, 24 est tronconique, le sommet des cônes correspondant étant à l'extérieur des ailes de l'étrier du support recevant le rouleau 21, les génératrices de chaque tronc de cône étant inclinées à 45 degrés par rapport à sa base.

Dès lors, lorsque l'ensemble est monté, et comme cela est visible notamment sur la figure 2, les quatre rouleaux 21 définissent un espace interne 100, destiné à recevoir le ou les câbles à mettre en place, qui est substantiellement fermé et son contour 101 est circulaire ; seuls subsistent les interstices entre deux rouleaux 21 voisins, lesquels sont très faibles et correspondent à un jeu fonctionnel permettant aux rouleaux d'être libres l'un par rapport à l'autre ; il est en tout cas très inférieur au diamètre du câble à mettre en place.

Comme on le comprend aisément, grâce à l'invention, il est possible de tirer un câble, à travers l'espace 100, dans toutes les directions, notamment, par rapport à la figure 2, vers le haut, vers le bas, vers la gauche ou vers la droite, l'un des rouleaux 21 étant toujours à disposition pour chacune de ces directions.

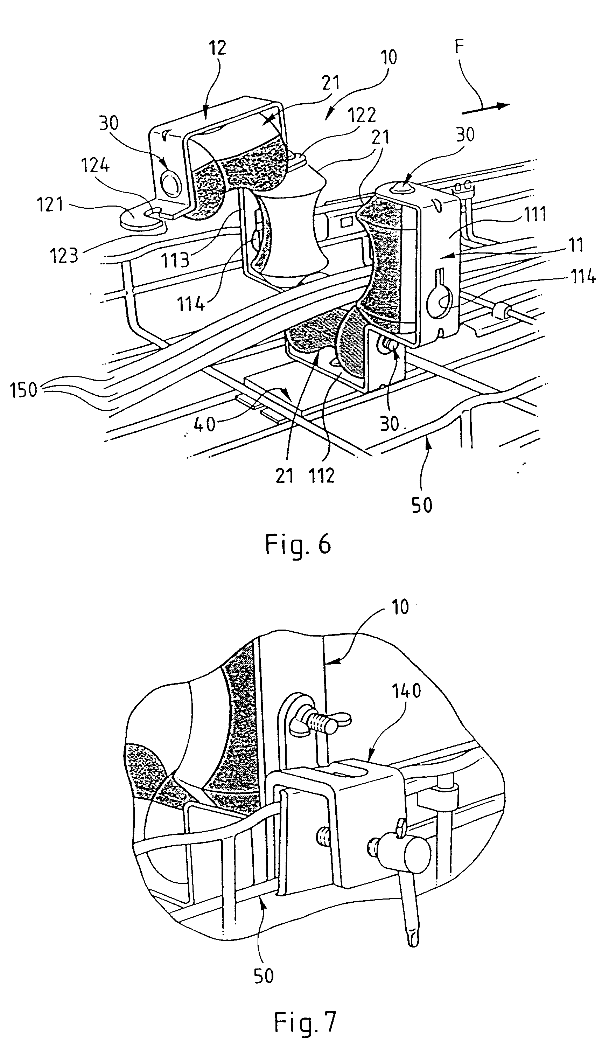

Pour faciliter l'introduction des câbles 150 dans l'espace 100 en vue de leur tirage, on préfère que le support 11-12 du dispositif de guidage 10 soit ouvrable ; ici, la patte 121 de la seconde pièce 12 est conformée en crochet grâce à une entaille 123 transversale, figure 6, débouchant dans une ouverture oblongue 124 longitudinale ; la largeur de l'entaille 123 et de l'ouverture oblongue 124, qui s'étend donc perpendiculairement par rapport à l'entaille 123, est à peine supérieure au diamètre du corps d'un axe 30 ; ainsi, à partir de la position ouverte du support 11-12 montrée figure 6, il suffit de faire pivoter la seconde pièce 12 du support 11-12, autour de l'axe qui traverse sa patte 122, pour amener sa patte 121 sur l'aile libre de l'étrier 111 de la première pièce 11 et sous la tête de l'axe 30 correspondant ; la fermeture du support 11-12 est verrouillée lorsque le corps de l'axe 30 ayant traversé l'entaille 123 prend place dans l'extrémité de l'ouverture oblongue 124 proche de l'aile de l'étrier de la seconde pièce 12. Pour être sûr qu'il en est bien ainsi, et donc pour assurer la sécurité du verrouillage, les âmes des étriers 111 et 113 ne sont pas au repos rigoureusement parallèles mais inclinées légèrement l'une vers l'autre en sorte que, pour la mise en place de l'entaille 123 sous la tête de l'axe 30 de l'étrier 111, les étriers 111 et 113 sont écartés l'un de l'autre ; lorsque le fond de l'entaille 123 est en place, ils reviennent élastiquement l'un vers l'autre, ce qui place le corps de l'axe 30 en bout de l'ouverture oblongue 124 et assure élastiquement la sécurité du verrouillage.

Quoi qu'il en soit, pour être sûr que lors de l'opération de tirage des câbles le support 11-12 ne risque pas de s'ouvrir, il suffit de positionner le dispositif de guidage 10 en sorte de tirer les câbles dans le sens de la flèche F, figure 6.

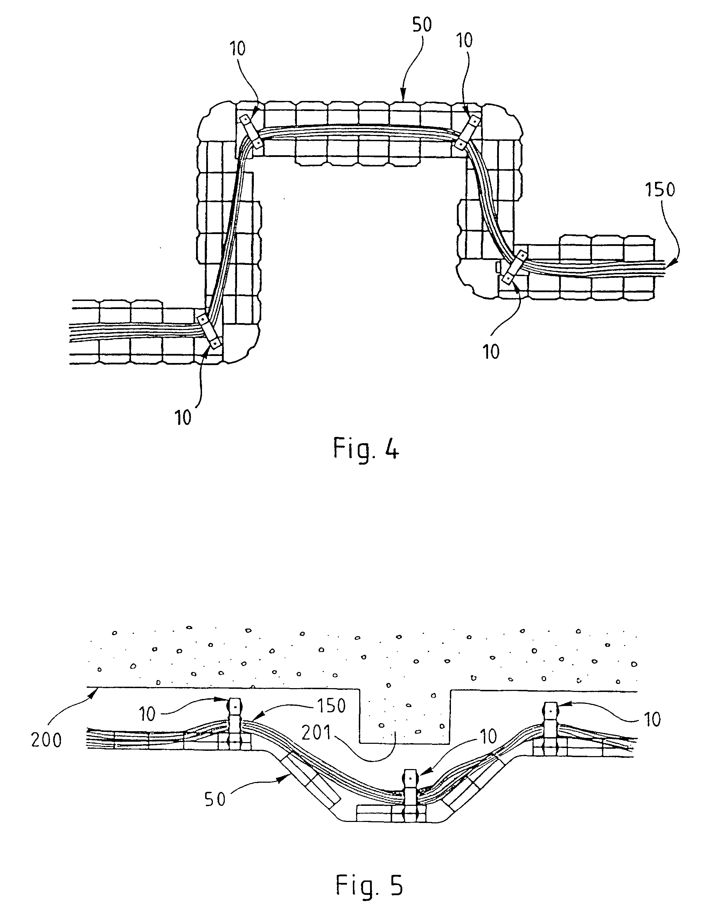

Pour rester dans l'exemple d'application du dispositif de guidage 10 à la mise en place de câbles 150 dans un chemin de câbles en fils 50, on a montré figure 4 en plan un tel chemin de câbles comportant quatre coudes, ici à angle droit ; grâce aux dispositifs de guidage 10 placés chacun au droit d'un coude, on voit qu'il est aisé de tirer les câbles 150 grâce à l'invention.

Sur la figure 5, en vue de côté le chemin de câbles 50 a une forme lui permettant d'éviter un obstacle 201, tel qu'une poutre, en proéminence sur un plafond 200 ; là également, les trois dispositifs de guidage 10 placés comme représenté permettent aisément de tirer les câbles 150 malgré le changement de plan.

Tels qu'ils sont représentés, la surface extérieure des rouleaux 21 comprend deux zones 25, 26 s'étendant de part et d'autre d'un plan passant par l'axe des rouleaux 21 ; ces deux zones 25, 26 sont de couleurs différentes, tranchées ; ici, la zone 25 est de couleur noire, et la zone 26 de couleur blanche ; bien entendu, ces deux couleurs peuvent être autres, dès l'instant qu'elles sont tranchées ; grâce à cette disposition, l'opérateur qui tire les câbles 150 est en mesure de constater, même de loin, que les rouleaux 21 concernés lors du tirage tournent bien et ne sont pas bloqués, ce qui risquerait, non seulement d'augmenter l'effort de tirage mais également, par frottement, d'endommager les câbles.

L'âme des étriers 111, 112, 113 de la première partie du support 11-12 présente une boutonnière 114 permettant la fixation du dispositif de guidage 10 sur un élément porteur.

Ici, dans l'exemple décrit et représenté l'élément porteur est le chemin de câbles 50 lui-même ; pour cela, il est prévu un accessoire de fixation 40 comportant des moyens d'assujettissement par lesquels il est rendu solidaire d'un des panneaux du chemin de câbles 50, ici le panneau de fond.

Dans le cas d'une mise en oeuvre avec un chemin de câbles en tôle, le dispositif de guidage 10 peut être directement fixé au chemin de câbles par boulonnage sur un panneau sans nécessiter d'accessoire de fixation.

L'accessoire de fixation 40 est du genre de celui qui est décrit dans le document WO 99/06746 auquel il conviendra de se reporter pour plus de détails. Rappelons simplement que l'accessoire de fixation 40 se présente sous la forme d'une plaquette globalement rectangulaire comportant, d'une part, figure 3, une rainure 41 qui s'étend en creux sur sa surface inférieure et qui est adaptée à recevoir un fil longitudinal 51 du chemin de câbles 50 et, d'autre part, des pattes 42, 43 dont l'une, la patte 43, comporte transversalement en saillie un bourrelet d'encliquetage 44 ; les pattes 42, 43 sont destinées à être placées sous deux fils transversaux 52 voisins, les dimensions de l'accessoire de fixation 40 étant prévues pour ce faire.

Ainsi, l'accessoire de fixation 40 est maintenu par rapport au chemin de câbles 50. Il présente par ailleurs divers perçages 45 dont l'un est mis à profit pour solidariser par vis-écrou le support 11-12, donc le dispositif de guidage 10, à l'accessoire de fixation 40.

D'autres types d'accessoires de fixation peuvent être utilisés comme, par exemple, celui qui est décrit dans le document FR-A-2 796 121, ou un moyen d'étau tel que le moyen d'étau 140 montré sur la vue partielle figure 7.

Le moyen d'étau 140 peut permettre la fixation du dispositif de guidage sur un groupe de deux fils, comme montré sur la figure 7, ou sur un panneau latéral d'un chemin de câbles en tôle ou sur une console de supportage du chemin de câbles.

Il est ainsi possible de monter le dispositif de guidage 10 dans n'importe quelle position sur un chemin de câbles, quel que soit le type de celui-ci.

## Revendications

1. Dispositif de guidage d'au moins un élément longiligne souple tel que câble ou autre, destiné à guider ledit élément lors d'une opération de tirage effectués par exemple pour sa mise en place, et comportant quatre rouleaux (21) montés pivotant autour d'un axe (30) prévu pour être disposé transversalement par rapport à la direction de déplacement de l'élément tiré et disposés en sorte qu'ils définissent un espace (100) destiné à recevoir ledit élément et dont le contour (101), apprécié globalement transversalement par rapport à ladite direction de déplacement, est substantiellement fermé, les axes (30) des rouleaux (21) étant portés par un support (11-12) fermé ouvrable en deux pièces dont l'une (12) est montée articulée par rapport à l'autre (11), **caractérisé par le fait qu'**une première pièce (11) est un fer-plat plié en sorte qu'elle est constituée de trois étriers (111, 112, 113) en U aboutés, deux étriers (111, 113) étant disposés face à face et reliés chacun à l'extrémité d'une aile du troisième étrier (112) dont l'âme s'étend perpendiculairement aux âmes, parallèles, desdits deux étriers (111, 113) et la seconde pièce (12) est un fer-plat plié en sorte de constituer un quatrième étrier en U analogue aux étriers (111, 112, 113) de la première pièce (11) mais dont les extrémités des ailes, non liées à l'âme de l'étrier en U, présentent chacune un prolongement sous forme d'une patte (121, 122) s'étendant vers l'extérieur du U parallèlement à l'âme dudit U.

2. Dispositif de guidage selon la revendication 1, **caractérisé par le fait que** chacun des étriers du support (11-12) reçoit un rouleau (21) monté libre en rotation autour d'un axe (30) porté par les ailes de chaque étrier du support (11-12) et s'étendant parallèlement à son âme.

3. Dispositif de guidage selon la revendication 2, **caractérisé par le fait que** les axes (30) sont maintenus axialement par, d'un côté, une tête (31) qu'ils présentent à une extrémité et, de l'autre côté, par un matage de leur autre extrémité (32) formant par exemple deux oreilles d'arrêt axial s'étendant radialement au delà du diamètre du trou, traversé par l'axe (30), ménagé dans l'aile correspondante du U.

4. Dispositif de guidage selon l'une des revendications 1 à 3, **caractérisé par le fait que** les axes (30) associés aux étriers (111 et 113) de la première pièce (11) qui se font face sont mis à profit pour solidariser les deux pièces (11, 12) du support en sorte que les deux pattes (121, 122) de la seconde pièce (12) sont maintenues appliquées contre la face externe des ailes libres desdits étriers (111, 112) de la première pièce (11).

5. Dispositif de guidage selon l'une des revendications 1 à 4, **caractérisé par le fait que** les axes (30) des rouleaux (21) sont quasiment dans un même plan.

6. Dispositif de guidage selon l'une des revendications 1 à 5, **caractérisé par le fait que** les rouleaux (21) sont tous identiques et leurs axes (30) sont disposés selon les côtés d'un carré.

7. Dispositif de guidage selon l'une des revendications 1 à 6, **caractérisé par le fait que** les deux pièces portent des moyens de verrouillage pour le maintien du support (11-12) en position de fermeture.

8. Dispositif de guidage selon la revendication 7, **caractérisé par le fait que** les moyens de verrouillage sont du type à crochet (123-124).

9. Dispositif de guidage selon la revendication 8, **caractérisé par le fait que** le crochet (123-124) coopère avec l'extrémité de l'axe (30) d'un rouleau (21) munie d'une tête (31).

10. Dispositif de guidage selon l'une des revendications 8 ou 9, **caractérisé par le fait que** le support (11-12) est maintenu élastiquement dans sa position de fermeture grâce à la partie (11), prévue élastique, du support qui porte le crochet.

11. Dispositif de guidage selon l'une des revendications 1 à 10, **caractérisé par le fait que** le contour (101) est circulaire.

12. Dispositif de guidage selon l'une des revendications 4 à 11, **caractérisé par le fait que** la surface périphérique externe des rouleaux (21) comprend une partie torique (22).

13. Dispositif de guidage selon la revendication 12, **caractérisé par le fait que** les extrémités (23, 24) des rouleaux (21) sont agencées en sorte que l'interstice entre les rouleaux (21) y est sensiblement nul.

14. Dispositif de guidage selon l'une des revendications 5 à 13, **caractérisé par le fait que** le support (11-12) comporte au moins une boutonnière (114) pour sa fixation à un élément porteur.

15. Dispositif de guidage selon l'une des revendications 1 à 14, **caractérisé par le fait que** la surface périphérique externe des rouleaux (21) est en au moins deux couleurs tranchées (25,26).

## Patentansprüche

1. Führungsvorrichtung für mindestens ein biegsames langgestrecktes Element wie beispielsweise ein Kabel oder Ähnliches, die das Element bei einem Vorgang des Ziehens führt, welcher beispielsweise beim Verlegen desselben ausgeführt wird, mit vier Rollen (21), die um eine Achse (30) verschwenkbar befestigt sind, wobei die Achse für eine Anordnung quer zur Verschieberichtung des gezogenen Elements vorgesehen ist, wobei die Rollen so angeordnet sind, dass sie einen Raum (100) festlegen, der das Element aufnimmt und dessen im Wesentlichen quer zur Verschieberichtung verlaufende Kontur (101) im Wesentlichen geschlossen ist, wobei die Achsen (30) der Rollen (21) von einem geschlossenen Träger (11-12) getragen werden, der sich in zwei Teile öffnen lässt, von denen eines (12) am anderen (11) angelenkt ist, **dadurch gekennzeichnet, dass** das erste Teil (11) ein Flacheisen ist, das so gebogen ist, dass es drei aneinander stoßende U-förmige Bügel (111, 112, 113) bildet ist, wobei zwei Bügel (111, 113) einander gegenüberliegend angeordnet und jeweils mit dem Ende eines Arms des dritten Bügels (112) verbunden sind, dessen Steg sich senkrecht zu den parallelen Stegen der beiden Bügel (111, 113) erstreckt, und dass das zweite Teil (12) ein Flacheisen ist, das so gebogen ist, dass es einen vierten U-förmigen Bügel analog zu den Bügeln (111, 112, 113) des ersten Teils (11) bildet, dessen nicht mit dem Steg des U-förmigen Bügels verbundenen Enden der Arme aber jeweils von einem Lappen (121, 122) verlängert werden, der sich über das U hinaus parallel zum Steg des U erstreckt.

2. Führungsvorrichtung nach Anspruch 1, **dadurch gekennzeichnet, dass** jeder der Bügel des Trägers (11-12) eine Rolle (21) aufnimmt, die um eine Achse (30) drehbeweglich montiert ist, welche von den Armen jedes Bügels des Trägers (11-12) getragen wird und parallel zu seinem Steg verläuft.

3. Führungsvorrichtung nach Anspruch 2, **dadurch gekennzeichnet, dass** die Achsen (30) axial auf der einen Seite von einem Kopf (31) gehalten werden, den sie an einem Ende aufweisen, und auf der anderen Seite durch Verstemmen ihres anderen Endes (32), das zum Beispiel zwei Ohren zum axialen Halt bildet, die sich radial über den Durchmesser des Lochs hinaus erstrecken, das von der Achse (30) durchquert wird und im entsprechenden Arm des U vorgesehen ist.

4. Führungsvorrichtung nach einem der Ansprüche 1 bis 3, **dadurch gekennzeichnet, dass** die Achsen (30), die den einander gegenüberliegenden Bügeln (111 und 113) des ersten Teils (11) zugeordnet sind, genutzt werden, um die beiden Teile (11, 12) des Trägers so miteinander zu verbinden, dass die beiden Lappen (121, 122) des zweiten Teils (12) an die Außenfläche der freien Arme der Bügel (111, 112) des ersten Teils (11) gedrückt gehalten werden.

5. Führungsvorrichtung nach einem der Ansprüche 1 bis 4, **dadurch gekennzeichnet, dass** die Achsen (30) der Rollen (21) in etwa in derselben Ebene liegen.

6. Führungsvorrichtung nach einem der Ansprüche 1 bis 5, **dadurch gekennzeichnet, dass** die Rollen (21) alle identisch und ihre Achsen (30) gemäß den Seiten eines Vierecks angeordnet sind.

7. Führungsvorrichtung nach einem der Ansprüche 1 bis 6, **dadurch gekennzeichnet, dass** die beiden Teile Verriegelungsmittel tragen, um den Träger (11-12) in geschlossener Position zu halten.

8. Führungsvorrichtung nach Anspruch 7, **dadurch gekennzeichnet, dass** die Verriegelungsmittel Haken (123-124) aufweisen.

9. Führungsvorrichtung nach Anspruch 8, **dadurch gekennzeichnet, dass** der Haken (123-124) mit dem Ende der Achse (30) einer Rolle (21) zusammenwirkt, welches mit einem Kopf (31) versehen ist.

10. Führungsvorrichtung nach einem der Ansprüche 8 oder 9, **dadurch gekennzeichnet, dass** der Träger (11-12) durch das elastisch ausgebildete Teil (11) des Trägers, das den Haken trägt, elastisch in seiner geschlossenen Position gehalten wird.

11. Führungsvorrichtung nach einem der Ansprüche 1 bis 10, **dadurch gekennzeichnet, dass** die Kontur (101) kreisförmig ist.

12. Führungsvorrichtung nach einem der Ansprüche 4 bis 11, **dadurch gekennzeichnet, dass** die peripherische Außenfläche der Rollen (21) einen torischen Abschnitt (22) aufweist.

13. Führungsvorrichtung nach Anspruch 12, **dadurch gekennzeichnet, dass** die Enden (23, 24) der Rollen (21) so angeordnet sind, dass der Zwischenraum zwischen den Rollen (21) dort im Wesentlichen null ist.

14. Führungsvorrichtung nach einem der Ansprüche 5 bis 13, **dadurch gekennzeichnet, dass** der Träger (11-12) mindestens eine längliche Aussparung (114) zu seiner Befestigung an einem Tragelement aufweist.

15. Führungsvorrichtung nach einem der Ansprüche 1 bis 14, **dadurch gekennzeichnet, dass** die peripherische Außenfläche der Rollen (21) in mindestens zwei sich voneinander abhebenden Farben (25, 26) gehalten ist.

## Claims

1. A device for guiding at least one flexible elongate member such as a cable or the like, adapted to guide said member during a drawing operation carried out to install it, for example, and including four rollers (21) rotatable about a shaft (30) adapted to be disposed transversely to the direction of movement of the drawn member and disposed so that they define a space (100) adapted to receive said member and whose contour (101) generally transversely to said direction of movement is substantially closed, the shafts (30) of the rollers (21) being carried by a closed but openable two-part support (11-12), one part (12) of which is articulated to the other part (11), **characterized in that** a first part (11) is a flat strip bent to a shape consisting of three butt-jointed U-shaped brackets (111, 112, 113), two brackets (111, 113) being disposed face to face and each connected to the end of a flange of the remaining bracket (112), whose web is perpendicular to the parallel webs of said two brackets (111, 113), and the second part (12) is a flat strip bent to form a fourth U-shaped bracket similar to the brackets (111, 112, 113) of the first part (11) but in which the ends of the flanges not joined to the web of the U-shaped bracket are extended by two lugs (121, 122) extending toward the outside of the U-shape in a direction parallel to the web of said U-shape.

2. A guide device according to claim 1, **characterized in that** each of the brackets of the support (11-12) receives a roller (21) freely rotatable about a shaft (30) carried by the flanges of each bracket of the support (11-12) and parallel to its web.

3. A guide device according to claim 2, **characterized in that** the shafts (30) are retained axially by, at one end, a head (31) that they have at one end and, at the other end, by deforming their other end (32) to form two stop lugs to prevent axial movement, for example, extending radially beyond the diameter of a hole formed in the corresponding flange of the U-shape and through which the shaft (30) passes.

4. A guide device according to any of claims 1 to 3, **characterized in that** the shafts (30) associated with the brackets (111 and 113) of the first part (11) that face each other are used to fasten together the two parts (11, 12) of the support so that the two lugs (121, 122) of the second part (12) are held pressed against the outside face of the free flanges of said brackets (111, 112) of the first part (11).

5. A guide device according to any of claims 1 to 4, **characterized in that** the shafts (30) of the rollers (21) are in substantially the same plane.

6. A guide device according to any of claims 1 to 5, **characterized in that** the rollers (21) are all identical and their shafts (30) are disposed along the sides of a square.

7. A guide device according to any of claims 1 to 6, **characterized in that** the two parts carry locking means for locking the support (11-12) in a closed configuration.

8. The guide device claimed in claim 7, **characterized in that** the locking means are hooklike (123-124).

9. A guide device according to claim 8, **characterized in that** the hook (123-124) cooperates with an end provided with a head (31) of the shaft (30) of a roller (21).

10. A guide device according to claim 8 or claim 9, **characterized in that** the support (11-12) is locked elastically in its closed configuration by an elastic part (11) of the support that carries the hook.

11. A guide device according to any of claims 1 to 10, **characterized in that** the contour (101) is circular.

12. A guide device according to any of claims 4 to 11, **characterized in that** the outside peripheral surface of the rollers (21) has a toroidal portion (22).

13. A guide device according to claim 12, **characterized in that** the ends (23, 24) of the rollers (21) are such that there is virtually no gap between the rollers (21).

14. A guide device according to any of claims 5 to 13, **characterized in that** the support (11-12) includes at least one slot (114) for fixing it to a support member.

15. A guide device according to any of claims 1 to 14, **characterized in that** the outside peripheral surface of the rollers (21) is of at least two sharply contrasting colors (25, 26).
